# EUROPEAN PATENT SPECIFICATION

(11) **EP 3 761 113 B1**
(45) Date of publication and mention of the grant of the patent: **25.11.2026**
(21) Application number: 19382562.7
(22) Date of filing: 01.07.2019
(51) Int. Cl.: G03B 17/02, G03B 19/22, G03B 17/56, B60R 11/04, H04N 23/51

(54) **OPTICAL DEVICE FOR A MOTOR VEHICLE**
OPTISCHE VORRICHTUNG FÜR EIN KRAFTFAHRZEUG
DISPOSITIF OPTIQUE POUR UN VÉHICULE AUTOMOBILE

(43) Date of publication of application: 06.01.2021
(73) Proprietor: Ficosa Adas, S.L.U., 08028 Barcelona (ES)
(72) Inventor: Abad García, Daniel, 08232 VILADECAVALLS (ES)
(74) Representative: ZBM Patents - Zea, Barlocci & Markvardsen

(56) References cited:
- WO-A1-2017/124038
- CN-U- 207 261 940
- CN-U- 207 817 388
- JP-A- 2004 112 553
- US-A1- 2015 002 623
- US-A1- 2016 318 457

## Description

### Filed of the invention

The present disclosure relates to exterior rear view mirrors for motor vehicles and specifically to rear view mirrors comprising a camera housing and subassemblies received therein having a lens and an image sensor or photo-sensor.

### Background

Exterior rear view mirrors in motor vehicles are known including one or more cameras to help drivers to see rear and side areas of the motor vehicle, outside the driver's peripheral vision. Such cameras may be located at different locations and orientations in the exterior rear view mirror.

In applications involving camera monitoring system (CMS), one camera is arranged in the motor vehicle pointing out substantially to a rearward direction. On the other hand, in top-view applications, also referred to as panoramic vision or surrounding vision, a camera is arranged pointing out substantially to the ground.

As used herein, the term substantially refers to cameras oriented not totally vertical in top-view applications or to cameras oriented not totally parallel to the ground in CMS applications. The final design, that is, the final position and orientation of the camera, depends ultimately on the design of the motor vehicle such as the length of the motor vehicle, the height of the exterior rear view mirror, the overall shape of the vehicle, in particular, of the exterior surface where the cameras are to be mounted such as for example in an outer surface of a motor vehicle door which are usually not completely flat, etc.

Digital cameras are also known in the art in which a lens is attached, e.g. glued, to a camera housing. The camera housing has a front portion and a rear portion welded together such as by ultrasonic welding when both parts are made of plastic or by laser welding when both parts are made of aluminium or joined together by means of fasteners such as by means of a screw and a rubber gasket. Such prior art digital camera further comprises an image sensor or photo-sensor and an adapter. The photo-sensor is connected to a printed circuit board (PCB) where image processing is performed.

The position and the orientation of the cameras to the motor vehicle is critical. Motor vehicles are increasingly autonomous so cameras are required not only to detect the environment, but also to make decisions on the captured image. Some of these decisions may be line detection, warning side collisions (WSC), blind spot detection (BSD), and so on. If cameras are not well placed, errors may occur. For example, an increase of height of the car due to a new tire or a new suspension may be enough to cause critical errors on the already mentioned line detectors (LD), WSC, BSD, etc.

An easy, well-known solution may be rotating the exterior rear view mirror system where the camera is located to a new position where errors do not occur. Said solution may be suitable when an optical device only includes a single camera, either in top-view or CMS systems. In that case, proper focusing is obtained by suitably rotating the camera carrier, that is, the exterior rear view mirror or winglet. However, when the exterior rear view mirror or winglet has more than one camera having different orientations or focus, then correcting orientations is not so easy by merely rotating the exterior rear view mirror or the winglet since it involves rotating the two cameras at the same time.

Exterior rear view mirrors including two cameras comprise a first rearward facing camera and a second camera substantially facing the ground. The first rearward facing camera provides images for camera monitoring system (CMS) which could be also used for any type of display such as for example an interior or central rear view mirror which may be useful, for example, for parking. The second camera substantially faces the ground at an angle usually outwards. Overlays may be optionally provided such as for example guidelines showing the motor vehicle parking process or where the wheels will roll of according to turning of the steering wheel.

US20090091651 A1 discloses a dual photographic camera apparatus comprising a display, two eye-viewers, and a fixed handle. A rotatable lens carrier is provided with two lens mounting bases so as to switch between the two lenses by rotating between them.

EP1511312 A1 teaches a camera lens assembly for portable wireless terminals comprising a first lens housing rotatably attached to a portable wireless terminal so that the first lens housing can be rotated about a first rotating axis and a second lens housing, having a camera lens mounted therein, that is rotatably attached to the first lens housing so that the second lens housing can be rotated about a second rotating axis that is perpendicularly to the first rotating axis.

JP2004112553A discloses a bracket for a camera that is formed as a U-shaped frame and has surfaces configured as part of a spherical surface. Supporting plates are arranged outside said surfaces one of which has a holding member which slides the surface in contact therewith and the other of which has a holding member.

US2016318457A1 shows a camera device having a bracket fixed to a vehicle interior side, a camera housing fixed to the bracket, a camera module fixed to the housing including a lens, and a hood for intercepting light incident from a lower side of the lens. An inclination angle of a lens optical axis to the housing is adjusted so that an object present ahead of the vehicle is captured within an angle of view of the camera module.

In practice, it has been found that provision of first and second cameras takes up much space and it is therefore not practical. Furthermore, each car model has different dimensions in terms of height and length so different rear view mirror or winglet sizes are required forcing the cameras to be specifically positioned and oriented. For example, a first car model could require a top-view camera to be oriented a given angle such as 4° from the vertical diverted towards the direction of the car, and a CMS camera to be oriented a given angle such as 9° outwards and to the direction of the ground. However, a second car model could require a top-view camera to be oriented 5° from the vertical diverted towards the direction of the car, and a CMS camera to be oriented 8° outwards and to the direction of the ground. As a result, different camera housings for different car models will be then required. This involves different moulds for making the camera housings for each car model as the camera housings are typically manufactured in an injection moulding process.

It is thus an object of the present disclosure to provide a single device located in a motor vehicle such as in a winglet, configured to output top-view images and rear view images with which the above disadvantages can be at least mitigated.

A further object of the present disclosure is to provide a flexible design for an optical device than can be adjusted with respect to the vehicle where it is to be installed before being attached thereto.

### SUMMARY

An optical device for a motor vehicle as claimed in claim 1 is disclosed herein. The present optical device can be arranged for example on a motor vehicle rear view mirror and on a motor vehicle winglet. The present optical device may be part of an exterior rear-view mirror located in a mounting assembly for capturing images from an exterior field of view of the motor vehicle. The field of view may extend at least sideward and rearward outside the vehicle and encompasses a portion of the exterior part of the vehicle.

In particular, the present optical device comprises a housing that comprises at least a first surface, a first optical subassembly having a first optical axis and comprising a first lens, a first image sensor responsible for top-view applications, that is, panoramic vision or surrounding vision such as a camera arranged pointing out substantially to the ground. The first image sensor of the first optical subassembly is aligned to the first lens. A bracket suitable for holding the lens and for supporting the first image sensor is also provided. The bracket may hold an electronics carrier or substrate such as a PCB. The image sensor is mounted in the PCB. Thus, the bracket directly or indirectly holds the electronics carrier.

Attaching means are also provided to bring the first optical subassembly into a first condition in which it can be moved relative to the first surface of the housing and into a second condition in which an interface, that is at least partially mounted on the first surface of the housing, is fixedly attached to the first surface of the housing. The attaching means are located between the interface and the first surface of the housing, in contact thereto. The attaching means may be glue or an adhesive such as a sticker. Other attaching means are of course possible. The attaching means may comprise a sealing means. The attaching means can be cured such as for example by ultraviolet light, and high temperature. The interface may be arranged to extend outwardly relative to the first optical axis.

A second optical subassembly may be provided comprising a second image sensor responsible for camera monitoring applications. In this case, a camera is arranged pointing out substantially to a rearward direction. Also in this case, the bracket may be provided in at least one of the first optical subassembly or the second optical subassembly.

The first optical device can be thus positioned such that the first optical subassembly is arranged to capture top-view images of a right side area of the motor vehicle and the second optical subassembly is arranged to capture images from the rear of the motor vehicle.

The first optical subassembly may be adapted to move relative to the first surface of the housing in three degrees of freedom, regarding to movements performed on perpendicular planes, in the first condition of the attaching means. That is, the first condition of the attaching means may involve a first dimension, a second dimension, and a third dimension, the third dimension being rotation. The first condition may correspond to a condition before applying a curing process to the attaching means, and the second condition may correspond to a condition after applying said curing process. In one example, the attaching means are a cured adhesive suitable for bonding the optical subassembly to the first surface of the housing. Said adhesive may be initially cured in an initial curing process that may comprise exposure to UV light after the optical subassembly is placed in a given orientation. The initially cured adhesive is then further cured to a further cured strength in a secondary curing process sufficiently strong to hold the optical subassembly relative to a bracket that will be described further below, for use of the optical device in a motor vehicle.

The first surface of the housing further comprises a first opening designed to at least partially receive the first optical subassembly. Said first surface may be planar, and the interface may be curved. However, it may be preferred that the first surface of the housing is curved with the interface comprising a curved or non-curved surface. More in particular, the first surface may be concave or convex in at least one direction and more in particular, the first surface may be concave or convex in two (perpendicular) directions (spherical). One side of the housing may be concave, and another side of the housing may be convex.

Within the meaning of the present disclosure, convex applies to a surface of the interface that is curved outwards to the bracket, while concave applies to a surface of the interface that is curved inwards to the interior of the housing. In any case, the radius of curvature of the curved surface of the interface may be substantially the same as the radius of curvature of the corresponding first surface of the housing. Also, the centre of curvature of the curved surface of the interface and that of the at least one of the corresponding first surface of the housing may fall on the same point.

The optical device may further comprise a second surface having a second opening, and a second optical subassembly having a second optical axis arranged at an angle with respect to the first optical axis and comprising a second lens. A second image sensor may be provided to be received in the second opening of the housing. The second surface may be convex or concave. In other words, where the optical device includes first and second surfaces with corresponding optical subassemblies, at least one of the first surface or the second surface is planar or at least one of the first surface or the second surface is non-planar such as, for example, curved such as cylindrical or partially hemispherical or fully spherical. Any configuration allows the optical subassemblies to be brought into the first or second conditions.

At least one of the first opening or the second opening of the housing may be larger than the corresponding first image sensor or second image sensor. As a result, a gap may exist between a given image sensor and a corresponding opening. Such gap is suitable to move, e. g. displace, rotate, slide, etc. the optical subassembly, so as to be positioned, i.e. oriented, with their corresponding optical axes arranged at a given orientation before at least one of the first or second optical subassemblies is fixedly attached to the housing as described above. That is, the gap between the first or second openings and the corresponding optical subassembly is such that the corresponding optical axis of the first or second optical subassemblies can be arranged at different suitable positions or orientations before at least one of the first or second optical subassemblies is fixedly attached to the housing. Said orientations merely result from a geometrical interference at the point where the brackets contact to each other and may range for example from +5° to -5° or from +8° to -8°. Other values are possible. Thus, more in general, the first opening or the second opening can be moved relative to the corresponding optical subassembly such that the corresponding optical axis of the first or second optical subassemblies can be moved to be arranged at different orientations within an angle ranging from +45° to -45° before at least one of the first or second optical subassemblies is fixedly attached to the housing. In particular, it may be preferred that the first opening or the second opening can be moved relative to the corresponding optical subassembly such that the corresponding optical axis of the first or second optical subassemblies can be moved to be arranged at different orientations within an angle ranging from +30° to - 30°.

In short, the optical device may be configured to have at least one opening sized such that it is greater than the corresponding image sensor when the image sensor is arranged within the housing, that is, when the optical subassembly is partially inserted into the housing.

The above described configuration provides for a single camera housing and subassembly to be used for a large number of different car models by simply positioning the subassemblies as required. Said configuration has been shown to be advantageous when at least one of the first optical subassembly or the second optical subassembly is a monitoring system for providing images from the rear of the vehicle, and at least one of the other of the first optical subassembly or the second optical subassembly is a video camera for providing top-view images from the ground in the surroundings of the vehicle.

The image sensor or photo-sensor may be arranged inside the first subassembly and the second subassembly. However, the first subassembly and the second subassembly may be part of the same structure of the camera housing, for example once they have been welded, or they can be joined by a fastening, fixing or attaching means such as glue or dual band adhesive tape. The subassemblies can be thus separate modules to be attached to the camera housing.

The bracket may also be configured to support at least one electronics carrier or substrate such as a printed circuit board (PCB). In some cases, the bracket may be configured to support a main printed circuit board and a secondary printed circuit board. In that case, the secondary printed circuit board may be configured as an Electronic Control Unit (ECU), preferably as an Image Signal Processor (ISP). The image sensor and the printed circuit board may be located within the housing. The main printed circuit board and the secondary printed circuit board may be both carried by the bracket.

The bracket has an interface for attachment to at least one of the first surface or the second surface of the housing at a given orientation. Said bracket interface may have a non-planar surface, such as a curved surface, for example, a convex surface or a concave surface. In this case, the radius of curvature of the bracket interface curved surface is substantially the same as the radius of curvature of at least one of the corresponding first surface or the second surface of the housing. It is also preferred in that case that the centre of the curvature of the bracket interface curved surface and that of the at least one of the corresponding first surface or the second surface of the housing fall on the same point. In particular, the radius of curvature of the bracket interface curved surface may range from 100 to 5 mm, preferably it may range from 50 to 10mm, and in one example it may be 15 mm.

In the present optical device, at least one of the first optical subassembly or the second optical subassembly may be a camera monitoring system (CMS) video camera. The CMS video camera is suitable for providing images from a side or rear portion of the vehicle. Also in the present optical device, at least one of the other first optical subassembly or the second optical subassembly may be a video camera for providing top-view images from the ground in the surroundings of the vehicle.

The first lens and the first image sensor of the first optical subassembly are both aligned along the first optical axis. In turn, the second lens and the second image sensor of the second optical subassembly are both aligned along the second optical axis.

An optical system for providing image information from surrounding areas of a motor vehicle as claimed in claim 15 is also disclosed herein.

The present optical system comprises at least a first optical device as described above positioned such that the first optical subassembly is arranged to capture top-view images of a left side area of the motor vehicle and at least a second optical device as described above arranged to capture images from the rear of a motor vehicle side and such that the first optical subassembly is arranged to capture top-view images of a right side area of the motor vehicle and such that the second optical subassembly is arranged to capture images from the rear of the motor vehicle. However, the optical devices may be positioned in other different locations of the motor vehicle such as for example in a front location (e.g. in a front bumper) or in a rear location (e.g. instead of a parking camera) of the motor vehicle for top-view, front view, and rear/parking view and backup camera applications, for example. The optical devices may be also positioned in a vehicle roof, e.g. in sharkfin devices, for example in vans and the like.

A controller is provided which is configured to provide image data deriving from the optical devices to at least one display. The controller is configured to provide image data deriving from the optical devices to at least one display.

According to the above, a one-piece housing may be provided configured to receive one or more optical subassemblies arranged into a plurality of orientations within an opening. In this way, a relative angle, in fact a first angle and a second angle perpendicular thereto, between the two subassemblies can be different for a given camera housing and corresponding subassemblies. As stated above, both the first and second optical subassemblies have three degrees of freedom, that is, two degrees of freedom and rotation around the optical axis, with the second degree of freedom being defined relative to the above mentioned second angle perpendicular to the fist angle.

### BRIEF DESCRIPTION OF THE DRAWINGS

Non-limiting examples of the present disclosure will be described in the following, with reference to the appended drawings in which one example of the present optical device is illustrated.

In the drawings:
Figure 1 is a sectional view of one example of the present optical device taken along line 2-2 of figure 2; and
Figure 2 is a top view of the optical device in figure 1.

### DETAILED DESCRIPTION OF EXAMPLES

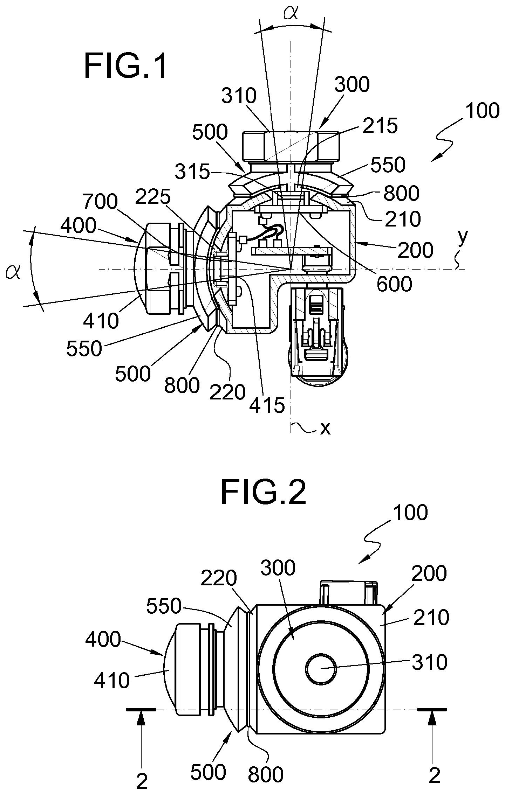

Generally, figures 1 and 2 show one example of the present optical device 100. It comprises a housing 200 having a first opening 215 and a first optical subassembly 300. The first optical subassembly 300 is partially inserted into the housing 200 although examples where the first optical subassembly 300 is outside the housing 200 are also possible. The first optical subassembly 300 is allowed to move, displace, rotate, slide, etc. relative to the housing 200 by means of an actuator, such as a rear view mirror. The present optical device 100 may be fixed to a surface of the motor vehicle, such as for example a door outer surface so that several field of view angles can be obtained

The housing 200 of the present optical device 100 comprises at least a first surface 210 having a first opening 215 for receiving a first camera lens 310 and a first image sensor 315. The first camera lens 310 and the first image sensor 315 are part of a first optical subassembly 300 having a first optical axis x associated therewith. The first optical subassembly 300 can be rotated about an axis X. This is important where the first image sensor 315 is rectangular in shape.

Figures show the first optical subassembly 300 having the first camera lens 310 although a number of camera lenses may be included as required. A bracket 500 is also provided having a cylindrical barrel. The barrel has a base member preferably flat and circular in shape containing or being part of an electronics carrier or substrate such as a printed circuit board (PCB) 600 having a first flat surface and a second flat surface. The first image sensor 315 is arranged on the first surface of the PCB 600. Said first surface of the PCB 600 is connected to the bracket barrel. The bracket has a projection projecting outward arranged in an upper portion of the above mentioned bracket barrel. Projections may be however located halfway up at the bracket barrel. In one example, projections are non-flat or curved in at least one direction such as curved in two perpendicular directions, that is, partially spherical. The camera lens 310 is at least partially inserted inside the bracket 500. An upper surface of the bracket interface 550 is attached, e.g. glued, to the camera lens 310.

Attaching means 800 are provided for attaching the bracket 500 with the corresponding first optical subassemblies 300 to the housing 200. In one specific, non-limiting example shown, the attaching means 800 may include a glue or an adhesive sheet to attach the bracket 500 with the corresponding first optical subassemblies 300 to the housing 200. Other attaching means 800 may be of course used such as a threaded coupling.

An inner surface of the bracket interface 550 is attached through said attaching means 800, e.g. glued, to the surface of the housing 200. The image sensor 315 is surrounded at the top by the lens 310, laterally by the bracket 500, and at the bottom by the above mentioned PCB 600. Once suitable or desired positioning or orientation of the camera lens 310 in the optical device 100 has been achieved, glue, for example, is cured, such as by ultraviolet irradiation, such that the optical subassembly 300 is held in position and do not move.

As shown in the figures, the first camera lens 310 and the first image sensor 315 in the first optical subassembly 300 are both aligned along the above mentioned first optical axis x. Such image sensor-lens 315, 310 alignment is achieved by swinging or sliding the bracket 500 suitably. The housing 200 is configured to receive the optical subassembly 300 which is in turn configured to receive the camera lens 310.

The first opening 215 is larger than the corresponding first image sensor 315 and second image sensor 415. A gap therefore exists between the opening 215 and the image sensors 315. Such gap is suitable for the optical subassembly 300 to be suitably positioned with their above mentioned corresponding optical axes x arranged at a given orientation before the first optical subassemblies 300 is fixedly attached, e.g. glued, to the housing 200.

In the example shown, at least one portion of the optical subassembly 300 is larger than the first opening 215. The farthest points of the bracket 500 are separated by a distance greater than the first opening 215.

The first surface 210 of the present optical device 100 may be non-planar such as for example curved, more specifically convex or concave. In this respect the subassemblies 300 can be received in the same camera housing 200 with the subassembly facing a given orientation or focus.

An optical device 100 for a motor vehicle is disclosed herein comprising a housing 200 defining an interior space for receiving optical device parts and electronics therein. The housing 200 comprises a first part such as a main housing or front housing part, not shown, and a second part such as a cover or back housing part, not shown. As shown in the drawings, the housing 200 comprises at least a first surface 210. The first surface 210 of the housing 200 has a first opening 215 for reiving a first camera lens 310 and a first image sensor 315. The first lens 310 and the first image sensor 315 are part of a first optical subassembly 300 having a first optical axis x associated therewith.

As stated above and as shown in the example shown, the optical device 100 comprises brackets 500 each associated with the first optical subassembly 300 and the second optical subassembly 400. The brackets 500 are configured for supporting the first image sensor 315 of the first optical subassembly 300 and the second image sensor 415 of the second optical subassembly 400. Each bracket 500 is suitable for holding the first camera lens 310 and for supporting the first image sensor 315 directly or through the PCB 600.

In the example shown, the bracket 500 has a bracket interface 550 defined for attachment to the first surface 210 or to the second surface 220 of the housing 200 at a given orientation. In the example shown, said first and second surfaces 210, 220 are curved. The radius of curvature of said curved surface may be substantially the same as the radius of curvature, 15 mm in this example, of at least one of the corresponding first or second surfaces 210, 220 of the housing 200. Also, the centre of the curvature of the curved surface of the bracket interface 550 and that of the at least one of the corresponding first or second surfaces 210, 220 of the housing 200 fall in this case on the same point, so it is concentrically arranged thereto. The radius of curvature of the bracket interface 550 is substantially greater that the first or second surfaces 210, 220 as the bracket 500 is higher or further away of the centre of the curvature.

The first camera lens 310 and the second camera lens 410 may thus be held according to a suitable orientation with the curved surfaces 210, 220 of the housing 200 properly attached to those of the bracket interface 550. This is because the bracket 500 is allowed to slide through its bracket interface 550 on the surfaces 210, 220 of the housing 200 before it is fixedly attached, e.g. glued, to the housing 200 when suitable positioning or orientation of the camera lenses 310, 410 in the optical device 100 has been achieved.

Before glue has been cured, at least one of the first camera lens 310 and the second camera lens 410 is allowed to one or more of moving, displacing, rotating, sliding, tilting, swinging, or the like, etc. when the first surface 210 of the housing 200 and the bracket interface 550 are curved having the same radius of curvature. In other examples, before glue has been cured, at least one of the first camera lens 310 and the second camera lens 410 is allowed to one or more of moving, displacing, rotating, sliding, tilting, swinging, or the like, etc. when at least one of the first surface 210 of the housing 200 and the bracket interface 550 is curved and the other of the first surface 210 of the housing 200 and the bracket interface 550 is non-curved.

In general, the bracket 500 is allowed to slide before glue has been cured when both the first surface 210 and the bracket interface 550 are curved and have the same radius of curvature, and the bracket 500 is allowed to tilt and/or swing before glue has been cured when at least one of the first surface 210 and the bracket interface 550 are curved and the other of the first surface 210 or the bracket interface 550 are non-curved.

The example where both the first surface 210 and the bracket interface 550 are curved and have the same radius of curvature is preferred since a larger contact surface is available resulting in enhanced sealing while the thickness of the glue or adhesive tape remains constant such as for example of the order of 0.5 mm.

Glue or adhesive tape may be positioned in one bottom surface of the bracket interface 550 or it may be positioned in one top surface of the first surface 210 of the housing 200. Adhesive curing may for example consist in applying ultraviolet light during about e.g. 5 - 20 seconds although this may vary depending on several factors and subsequently feeding it into a furnace during about 5 - 10 minutes under 100°C without exceeding maximum temperature at the maximum electronics allowable temperature which is usually 120°C.

Non-limiting examples of orientations of the camera lens 310 in the optical device 100 are of the order of 8° in each direction, that is, 16° in total. The optical subassembly 300 can be each rotated around two axes one of which is perpendicular to the drawings.

As shown in the figures, the optical device 100 for a motor vehicle has two subassemblies: a first subassembly 300 and a second subassembly 400. The first subassembly is mounted on the first surface 210 of the housing 200, and the second subassembly is mounted on the second surface 220 of the housing 200. In particular, both subassemblies 300, 400 are partially located outside of the housing 200.

Also as shown in the figures, the first camera lens 310 and the first image sensor 315 in the first optical subassembly 300 are both aligned along the above mentioned first optical axis x. Likewise, the second camera lens 410 and the second image sensor 415 of the second optical subassembly 400 are both aligned along the above mentioned second optical axis y.

In the example shown, the first opening 215 and the second opening 225 of the housing 200 are larger than the corresponding first image sensor 315 and second image sensor 415. A gap exists between the openings 215, 225 and the image sensors 315, 415. Such gap is suitable for the optical subassembly 300, 400 to be suitably positioned with their above mentioned corresponding optical axes x, y arranged at a given orientation before at least one of the first or second optical subassemblies 300, 400 is fixedly attached, e.g. glued, to the housing 200. Specifically, according to the example shown, the gap is formed between the barrel of the bracket 500 and the opening 215, 225.

It may be preferred that the gap between the first or the second openings 215, 225 and the corresponding optical subassembly 300, 400 is such that the corresponding optical axis x, y of the first or second optical subassemblies 300, 400 can be arranged at different orientations according to an angle α ranging from +8° to -8° from a given orientation before at least one of the first or second optical subassemblies 300, 400 is fixedly attached, e.g. glued, to the housing 200.

As the α angle is varied, the subassemblies 300 and 400 slide such that they move closer to each other until they contact each other. In the example shown the angle α is 8° although other values are possible.

At least one of the first surface 210 or the second surface 220 of the present optical device 100 may be non-planar such as for example curved, more specifically convex or concave. Non-flat geometry of the surface of the housing 200 and the first and/or second optical subassemblies 300, 400 is of utmost significance particularly when two or more cameras are provided. In this respect, two or more subassemblies 300, 400 can be received in the same camera housing 200 with each subassembly facing a given orientation or focus.

In the example shown, the optical device 100 comprises brackets 500 each associated with the first optical subassembly 300 and the second optical subassembly 400. The brackets 500 are configured for supporting the first image sensor 315 of the first optical subassembly 300 and the second image sensor 415 of the second optical subassembly 400.

In the example shown, the bracket 500 has a bracket interface defined for attachment to the first surface 210 or to the second surface 220 of the housing 200 at a given orientation. In the example shown, said first and second surfaces 210, 220 are curved. The radius of curvature of said curved surface may be substantially the same as the radius of curvature, for example, 15 mm, of at least one of the corresponding first or second surfaces 210, 220 of the housing 200. Also, the centre of the curvature of the curved surface of the bracket interface 550 and that of the at least one of the corresponding first or second surfaces 210, 220 of the housing 200 fall in this case on the same point. The first camera lens 310 and the second camera lens 410 may thus be held according to a suitable orientation with the curved surfaces 210, 220 of the housing 200 properly attached to those of the bracket interface 550. This is because the bracket 500 is allowed to slide through its bracket interface 550 on the surfaces 210, 220 of the housing 200 before it is fixedly attached, e.g. glued, to the housing 200 when suitable positioning or orientation of the camera lenses 310, 410 in the optical device 100 has been achieved.

In the specific, non-limiting example shown, a glue or an adhesive sheet is used to attach the bracket 500 with the corresponding first and second optical subassemblies 300, 400 to the housing 200. Other attaching means 800 may be of course used such as a threaded coupling. Once said positioning or orientation of the camera lenses 310, 410 in the optical device 100 has been achieved, said glue is cured, such as by ultraviolet irradiation, such that the optical subassemblies 300, 400 are held in position and do not move. Non-limiting examples of orientations of the camera lenses 310, 410 in the optical device 100 are of the order of 8° in each direction, that is, 16° in total. The optical subassemblies 300, 400 can be each rotated around two axes.

In the present optical device 100, the first and second optical subassemblies 300, 400 include corresponding printed circuit boards 600, 700 carried by the bracket 500. A main printed circuit board 600 is carried by the bracket 500 in the first optical subassembly 300 configured as a main Electronic Control Unit (ECU), particularly as an Image Signal Processor (ISP) for processing top-view images from the optical devices 100. The ISP may be provided in the same PCB as the image sensor 315, 415 or not. There may be cases where each optical subassembly 300, 400 has two PCB's 600, 700 such as for example in parallel, spaced apart by a 2-20 mm gap, one above the other, with one PCB being associated with one image sensor 315, 415 and the other PCB being associated with the ISP.

Images, such as top-view images, may be displayed through either a dashboard display unit or a display fitted in the interior rearview mirror which may be a touch display, for example. A secondary PCB (ISP) 700 is carried by the bracket 500 in the second optical subassembly 400. A third PCB configured as a serializer having a power supply is also provided. The third PCB is arranged outside at least one of the first and second optical subassemblies 300, 400 inside the optical device 100. The third PCB is connected both to the main printed circuit board 600 and on the other hand to a connector such as a power over coax or a flex.

The first optical subassembly 300 or the second optical subassembly 400, or both the first and second optical subassemblies 300, 400 may be part of a camera monitoring system (CMS) video camera. The CMS video camera is configured to provide images from the rear of the vehicle. Also in the example, the first optical subassembly 300 or the second optical subassembly 400, or both the first and second optical subassemblies 300, 400 may be a video camera for providing top-view images from the ground in the surroundings of the vehicle.

In the example shown, the CMS video camera has a frame rate of more than 30 frames per second, preferably 60 frames per second while the top-view camera has a frame rate lower than CMS such as 15 frames per second.

The above described optical device 100 may be advantageously fitted in an optical system for providing image information from surrounding areas of a motor vehicle. Such optical system may comprise the above described optical device 100 arranged such that the first optical subassembly 300 is positioned for capturing top-view images of a left side area of the motor vehicle and such that the second optical subassembly 400 is positioned for capturing images from the rear of a motor vehicle side. The optical system may further comprise another optical device 100 as described above positioned such that the first optical subassembly 300 is positioned for capturing top-view images of a right side area of the motor vehicle and such that the second optical subassembly 400 is positioned for capturing images from the rear of the motor vehicle. The optical system may further comprise a controller configured to provide image data deriving from the optical devices 100 to at least one display.

The above described optical system may be embodied as a winglet, preferably two winglets in a motor vehicle with each winglet comprising the above described optical device 100. Images from the camera monitoring system (CMS) video camera from the rear of the vehicle can be thus displayed by a display, preferably a touch display, positioned on the inside of a vehicle door. Images displayed by said display can be panned by the user through a touch-and-drag action or by means of a joystick. As the image is panned, the winglet is either moved or a mask or image display section is smaller than the image captured by the CMS camera of the optical device such that said mask is movable within the captured image.

The vision system of the vehicle comprises (i) a forward viewing camera having a field of view forward of the vehicle, (ii) a rearward viewing camera having a field of view rearward of the vehicle, (iii) a driver-side viewing camera pointing substantially to the ground (top view driver's camera), (iv) a passenger-side sideward viewing camera pointing substantially to the ground (top view passenger's camera). The vision system further comprises (v) a driver-side viewing camera having a sideward field of view at the driver side of the view encompassing a portion of the lateral side of the vehicle (CMS driver's view), and (vi) a passenger-side sideward viewing camera having a sideward field of view at the passenger side view encompassing a portion of the lateral side of the vehicle (CMS passenger's view).

An image processing system is operable to process image data captured by (i), (ii), (iii) and (iv), so as to synthesize a composite image derived from said captured image data. Further, a second image processing system is operable to process image data captured by (v) to show the image in a display, preferably located in the vehicle, and more preferably located on the driver's door. Further, a third image processing system is operable to process image data captured by (vi) to show the image in a display, preferably located in the vehicle, and more preferably located on the passenger's door.

Although only a number of examples have been disclosed herein, other alternatives, modifications, uses and/or equivalents thereof are possible. For example, the camera housing is not limited to a particular shape and it may for example be prismatic having six substantially flat surfaces, although other different geometries are also possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

A method is also disclosed herein for mounting the optical subassembly described above. The method comprises providing an image sensor on a printed circuit board (PCB), mounting said PCB on the bracket, attaching the lens to the bracket for example through the use of glue applied on an upper surface of the bracket interface or on the lens, or both on an upper surface of the bracket interface and the lens. The lens may be attached to the bracket through other means such as by screwing. The lens is placed, i.e. orientated, in a suitable or desired position and brought into focus with the image sensor to be optically center-aligned therewith. The lens and the image sensor are thus aligned. Where the attaching means comprise glue, glue is then cured such as by UV or thermal radiation. The optical subassembly is then mounted to the housing. Sealing glue is applied to an outer surface in the exterior of the housing and/or in a lower surface of the bracket interface. The optical subassembly is then positioned at a given position and the glue is then finally cured such as by UV or thermal radiation.

## Claims

1. An optical device (100) for a motor vehicle, the optical device (100) comprising:
- a first optical subassembly (300) having a first optical axis (x) and comprising a first lens (310), a first image sensor (315), and a bracket (500) suitable for holding the lens (310) and for supporting the first image sensor (315), wherein the bracket (500) comprises a bracket interface (550);
- a housing (200) that comprises at least a first surface (210), wherein the first surface (210) further comprises a first opening (215) designed to at least partially receive the first optical subassembly (300), wherein a portion of the bracket (500) is arranged within the housing (200);
- an attaching means (800) adapted to bring the first optical subassembly (300) into a first condition in which it can be moved relative to the first surface (210) and into a second condition in which the bracket interface (550) is fixedly attached to the first surface (210); and
wherein the bracket interface (550) is arranged to extend outwardly relative to the first optical axis (x);
wherein the bracket interface (550) is at least partially mounted on the first surface (210) of the housing (200), and wherein the first image sensor (315) is aligned to the first lens (310), and wherein the attaching means (800) is in contact to the bracket interface (550) and the first surface (210), and wherein at least one of the first surface (210) and the bracket interface (550) is a non-planar surface; and
wherein the at least one of the first surface (210) and the bracket interface (550) is curved inwards to an interior of the housing (200) or curved outwards to an exterior the housing (200), in at least one direction.

2. The optical device (100) of claim 1, wherein the first optical subassembly (300) is adapted to move relative to the first surface (210) of the housing (200) in three degrees of freedom in the first condition of the attaching means (800).

3. The optical device (100) of any preceding claim, wherein the first surface (210) is curved and the interface (550) comprises a non-curved surface, or wherein the first surface (210) is planar and the interface (550) is curved.

4. The optical device (100) of any preceding claim, wherein the first surface (210) is curved and the bracket interface (550) comprises a curved surface.

5. The optical device (100) of any of the preceding claims, wherein the radius of curvature of the curved surface of the bracket interface (550) is substantially the same as the radius of curvature of the corresponding first surface (210) of the housing (200).

6. The optical device (100) of any of the preceding claims, wherein the centre of the curvature of the curved surface of the bracket interface (550) and that of the corresponding first surface (210) of the housing (200) fall on the same point.

7. The optical device (100) of any of the preceding claims, wherein the attaching means (800) is located between the bracket interface (550) and the first surface (210).

8. The optical device (100) of any of the preceding claims, wherein it further comprises:
- the housing (200) that further comprises a second surface (220);
- a second optical subassembly (400) having a second optical axis (y) and comprising a second lens (410), a second image sensor (415), and a bracket (500) suitable for holding the second lens (410) and for supporting the second image sensor (415);
- an attaching means (800) adapted to bring the second optical subassembly (400) into a first condition in which it can be moved relative to the second surface (220) and into a second condition in which a second bracket interface (550) is fixedly attached to the second surface (220); and
wherein the second bracket interface (550) is at least partially mounted on the second surface (220) of the housing (200), and wherein the second image sensor (415) is aligned to the second lens (410), and wherein the attaching means (800) is in contact to the second bracket interface (550) and the second surface (220), and wherein at least one of the second surface (220) and the second bracket interface (550) is a non-planar surface so as to bring the second optical subassembly (400) into the first condition or into the second condition, and wherein the second optical axis (y) is arranged at an angle (α) with respect to the first optical axis (x).

9. The optical device (100) of claim 8, wherein the second optical subassembly (400) is adapted to move relative to the second surface (220) of the housing (200) in three degrees of freedom in the first condition of the attaching means (800), such that the first or second optical subassemblies (300, 400) can be moved relative to each other such that the optical axis (x, y) of the first or second optical subassemblies (300, 400) can be arranged at different orientations according to an angle (α) ranging from +45° to -45° before at least one of the first or second optical subassemblies (300, 400) is fixedly attached to the housing (200).

10. The optical device (100) of claim 8 or 9, wherein the second bracket interface (550) is arranged to extend outwardly relative to the second optical axis (y), and wherein the second surface (220) is curved and the second bracket interface (550) comprises a non-curved surface, or wherein the second surface (220) is planar and the second bracket interface (550) is curved.

11. The optical device (100) of any of the claims 8-10, wherein the second surface (220) is curved and the second bracket interface (550) comprises a curved surface, wherein the radius of curvature of the curved surface of the second bracket interface (550) is substantially the same as the radius of curvature of the second surface (220), and wherein the centre of the curvature of the curved surface of the second bracket interface (550) and the corresponding second surface (220) of the housing (200) fall on the same point.

12. The optical device (100) of any of the claims 8-11, wherein at least one of the first optical subassembly (300) or the second optical subassembly (400) is a camera monitoring system video camera providing images from the rear of the vehicle, and at least one of the other first optical subassembly (300) or the second optical subassembly (400) is a video camera for providing top-view images from the ground in the surroundings of the vehicle.

13. An optical system for providing image information from surrounding areas of a motor vehicle, the system comprising:
- at least a first optical device (100) according to one or more of the claims 1-12 positioned such that the first optical subassembly (300) is arranged to capture top-view images of a left side area of the motor vehicle;
- at least a second optical device (100) according to one or more of the claims 8-12 arranged to capture images from the rear of a motor vehicle side and such that the first optical subassembly (300) is arranged to capture top-view images of a right side area of the motor vehicle and such that the second optical subassembly (400) is arranged to capture images from the rear of the motor vehicle; and
a controller configured to provide image data deriving from the optical devices (100) to at least one display.

## Patentansprüche

1. Eine optische Vorrichtung (100) für ein Kraftfahrzeug, wobei die optische Vorrichtung (100) Folgendes umfasst:
- eine erste optische Unterbaugruppe (300) mit einer ersten optischen Achse (x) und umfassend eine erste Linse (310), einen ersten Bildsensor (315) und eine Halterung (500), die zum Halten der Linse (310) und zum Tragen des ersten Bildsensors (315) geeignet ist, wobei die Halterung (500) eine Halterungsschnittstelle (550) umfasst;
- ein Gehäuse (200), das mindestens eine erste Oberfläche (210) umfasst, wobei die erste Oberfläche (210) ferner eine erste Öffnung (215) umfasst, die dazu ausgelegt ist, die erste optische Unterbaugruppe (300) zumindest teilweise aufzunehmen, wobei ein Abschnitt der Halterung (500) innerhalb des Gehäuses (200) angeordnet ist;
- ein Befestigungsmittel (800), das angepasst ist, um die erste optische Unterbaugruppe (300) in einen ersten Zustand, in dem sie relativ zu der ersten Oberfläche (210) bewegt werden kann, und in einen zweiten Zustand zu bringen, in dem die Halterungsschnittstelle (550) fest an der ersten Oberfläche (210) befestigt ist; und
wobei die Halterungsschnittstelle (550) angeordnet ist, um sich relativ zu der ersten optischen Achse (x) nach außen zu erstrecken;
wobei die Halterungsschnittstelle (550) mindestens teilweise an der ersten Oberfläche (210) des Gehäuses (200) angebracht ist und wobei der erste Bildsensor (315) auf die erste Linse (310) ausgerichtet ist und wobei das Befestigungsmittel (800) in Kontakt mit der Halterungsschnittstelle (550) und der ersten Oberfläche (210) steht und wobei mindestens eine von der ersten Oberfläche (210) und der Halterungsschnittstelle (550) eine nicht planare Oberfläche ist; und
wobei die mindestens eine von der ersten Oberfläche (210) und der Halterungsschnittstelle (550) in mindestens einer Richtung nach innen zu einem Inneren des Gehäuses (200) oder nach außen zu einem Äußeren des Gehäuses (200) gekrümmt ist.

2. Die optische Vorrichtung (100) von Anspruch 1, wobei die erste optische Unterbaugruppe (300) angepasst ist, um sich relativ zu der ersten Oberfläche (210) des Gehäuses (200) in drei Freiheitsgraden in dem ersten Zustand des Befestigungsmittels (800) zu bewegen.

3. Die optische Vorrichtung (100) von einem der vorhergehenden Ansprüche, wobei die erste Oberfläche (210) gekrümmt ist und die Schnittstelle (550) eine nicht gekrümmte Oberfläche umfasst, oder wobei die erste Oberfläche (210) planar ist und die Schnittstelle (550) gekrümmt ist.

4. Die optische Vorrichtung (100) von einem der vorhergehenden Ansprüche, wobei die erste Oberfläche (210) gekrümmt ist und die Halterungsschnittstelle (550) eine gekrümmte Oberfläche umfasst.

5. Die optische Vorrichtung (100) von einem der vorhergehenden Ansprüche, wobei der Krümmungsradius der gekrümmten Oberfläche der Halterungsschnittstelle (550) im Wesentlichen der gleiche ist wie der Krümmungsradius der entsprechenden ersten Oberfläche (210) des Gehäuses (200).

6. Die optische Vorrichtung (100) von einem der vorhergehenden Ansprüche, wobei der Mittelpunkt der Krümmung der gekrümmten Oberfläche der Halterungsschnittstelle (550) und der der entsprechenden ersten Oberfläche (210) des Gehäuses (200) auf den gleichen Punkt fallen.

7. Die optische Vorrichtung (100) von einem der vorhergehenden Ansprüche, wobei das Befestigungsmittel (800) zwischen der Halterungsschnittstelle (550) und der ersten Oberfläche (210) angeordnet ist.

8. Die optische Vorrichtung (100) von einem der vorhergehenden Ansprüche, wobei sie ferner Folgendes umfasst:
- das Gehäuse (200), das ferner eine zweite Oberfläche (220) umfasst;
- eine zweite optische Unterbaugruppe (400) mit einer zweiten optischen Achse (y) und umfassend eine zweite Linse (410), einen zweiten Bildsensor (415) und eine Halterung (500), die zum Halten der zweiten Linse (410) und zum Tragen des zweiten Bildsensors (415) geeignet ist;
- ein Befestigungsmittel (800), das dazu ausgelegt ist, die zweite optische Unterbaugruppe (400) in einen ersten Zustand, in dem sie relativ zu der zweiten Oberfläche (220) bewegt werden kann, und in einen zweiten Zustand zu bringen, in dem eine zweite Halterungsschnittstelle (550) fest an der zweiten Oberfläche (220) befestigt ist; und
wobei die zweite Halterungsschnittstelle (550) mindestens teilweise an der zweiten Oberfläche (220) des Gehäuses (200) angebracht ist und wobei der zweite Bildsensor (415) auf die zweite Linse (410) ausgerichtet ist und wobei das Befestigungsmittel (800) in Kontakt mit der zweiten Halterungsschnittstelle (550) und der zweiten Oberfläche (220) ist und wobei mindestens eine von der zweiten Oberfläche (220) und der zweiten Halterungsschnittstelle (550) eine nicht planare Oberfläche ist, um die zweite optische Unterbaugruppe (400) in den ersten Zustand oder in den zweiten Zustand zu bringen, und wobei die zweite optische Achse (y) in einem Winkel (α) in Bezug auf die erste optische Achse (x) angeordnet ist.

9. Die optische Vorrichtung (100) von Anspruch 8, wobei die zweite optische Unterbaugruppe (400) angepasst ist, um sich relativ zu der zweiten Oberfläche (220) des Gehäuses (200) in drei Freiheitsgraden in dem ersten Zustand des Befestigungsmittels (800) zu bewegen, so dass die erste oder zweite optische Unterbaugruppe (300, 400) relativ zueinander bewegt werden können, so dass die optische Achse (x, y) der ersten oder zweiten optischen Unterbaugruppe (300, 400) in verschiedenen Ausrichtungen gemäß einem Winkel (α) im Bereich von +45° bis -45° angeordnet werden kann, bevor mindestens eine von der ersten oder zweiten optischen Unterbaugruppe (300, 400) fest an dem Gehäuse (200) befestigt ist.

10. Die optische Vorrichtung (100) von Anspruch 8 oder 9, wobei die zweite Halterungsschnittstelle (550) angeordnet ist, um sich relativ zu der zweiten optischen Achse (y) nach außen zu erstrecken, und wobei die zweite Oberfläche (220) gekrümmt ist und die zweite Halterungsschnittstelle (550) eine nicht gekrümmte Oberfläche umfasst, oder wobei die zweite Oberfläche (220) planar ist und die zweite Halterungsschnittstelle (550) gekrümmt ist.

11. Die optische Vorrichtung (100) von einem der Ansprüche 8 bis 10, wobei die zweite Oberfläche (220) gekrümmt ist und die zweite Halterungsschnittstelle (550) eine gekrümmte Oberfläche umfasst, wobei der Krümmungsradius der gekrümmten Oberfläche der zweiten Halterungsschnittstelle (550) im Wesentlichen derselbe ist wie der Krümmungsradius der zweiten Oberfläche (220), und wobei der Mittelpunkt der Krümmung der gekrümmten Oberfläche der zweiten Halterungsschnittstelle (550) und der entsprechenden zweiten Oberfläche (220) des Gehäuses (200) auf den gleichen Punkt fallen.

12. Die optische Vorrichtung (100) von einem der Ansprüche 8 bis 11, wobei mindestens eine von der ersten optischen Unterbaugruppe (300) oder der zweiten optischen Unterbaugruppe (400) eine Kameraüberwachungssystem-Videokamera ist, die Bilder von der Rückseite des Fahrzeugs bereitstellt, und mindestens eine von der anderen ersten optischen Unterbaugruppe (300) oder der zweiten optischen Unterbaugruppe (400) eine Videokamera ist, um Bilder von oben vom Boden in der Umgebung des Fahrzeugs bereitzustellen.

13. Ein optisches System zum Bereitstellen von Bildinformationen aus umgebenden Bereichen eines Kraftfahrzeugs, wobei das System Folgendes umfasst:
- mindestens eine erste optische Vorrichtung (100) nach einem oder mehreren der Ansprüche 1-12, die so positioniert ist, dass die erste optische Unterbaugruppe (300) angeordnet ist, um Bilder von oben von einem linken Seitenbereich des Kraftfahrzeugs aufzunehmen;
- mindestens eine zweite optische Vorrichtung (100) nach einem oder mehreren der Ansprüche 8-12, die angeordnet ist, um Bilder von der Rückseite einer Kraftfahrzeugseite zu erfassen, und derart, dass die erste optische Unterbaugruppe (300) angeordnet ist, um Bilder von oben von einem rechten Seitenbereich des Kraftfahrzeugs zu erfassen, und derart, dass die zweite optische Unterbaugruppe (400) angeordnet ist, um Bilder von der Rückseite des Kraftfahrzeugs zu erfassen; und
eine Steuerung, die dazu konfiguriert ist, Bilddaten, die von den optischen Vorrichtungen (100) stammen, an mindestens eine Anzeige bereitzustellen.

## Revendications

1. Un dispositif optique (100) pour un véhicule à moteur, le dispositif optique (100) comprenant :
- un premier sous-ensemble optique (300) ayant un premier axe optique (x) et comprenant une première lentille (310), un premier capteur d'image (315) et un support (500) approprié pour maintenir la lentille (310) et pour supporter le premier capteur d'image (315), dans lequel le support (500) comprend une interface de support (550) ;
- un boîtier (200) qui comprend au moins une première surface (210), dans lequel la première surface (210) comprend en outre une première ouverture (215) conçue pour recevoir au moins partiellement le premier sous-ensemble optique (300), dans lequel une partie du support (500) est agencée à l'intérieur du boîtier (200) ;
- un moyen de fixation (800) adapté pour amener le premier sous-ensemble optique (300) dans un premier état dans lequel il peut être déplacé par rapport à la première surface (210) et dans un second état dans lequel l'interface de support (550) est attachée de manière fixe à la première surface (210) ; et
dans lequel l'interface de support (550) est agencée pour s'étendre vers l'extérieur par rapport au premier axe optique (x) ;
dans lequel l'interface de support (550) est au moins partiellement montée sur la première surface (210) du boîtier (200), et dans lequel le premier capteur d'image (315) est aligné sur la première lentille (310), et dans lequel le moyen de fixation (800) est en contact avec l'interface de support (550) et la première surface (210), et dans lequel au moins l'une de la première surface (210) et de l'interface de support (550) est une surface non plane ; et
dans lequel la au moins une de la première surface (210) et de l'interface de support (550) est incurvée vers l'intérieur vers un intérieur du boîtier (200) ou incurvée vers l'extérieur vers un extérieur du boîtier (200), dans au moins une direction.

2. Le dispositif optique (100) de la revendication 1, dans lequel le premier sous-ensemble optique (300) est adapté pour se déplacer par rapport à la première surface (210) du boîtier (200) dans trois degrés de liberté dans la première condition du moyen de fixation (800).

3. Le dispositif optique (100) de l'une quelconque des revendications précédentes, dans lequel la première surface (210) est incurvée et l'interface (550) comprend une surface non incurvée, ou dans lequel la première surface (210) est plane et l'interface (550) est incurvée.

4. Le dispositif optique (100) de l'une quelconque des revendications précédentes, dans lequel la première surface (210) est incurvée et l'interface de support (550) comprend une surface incurvée.

5. Le dispositif optique (100) de l'une quelconque des revendications précédentes, dans lequel le rayon de courbure de la surface incurvée de l'interface de support (550) est sensiblement le même que le rayon de courbure de la première surface correspondante (210) du boîtier (200).

6. Le dispositif optique (100) de l'une quelconque des revendications précédentes, dans lequel le centre de la courbure de la surface incurvée de l'interface de support (550) et celui de la première surface correspondante (210) du boîtier (200) tombent sur le même point.

7. Le dispositif optique (100) de l'une quelconque des revendications précédentes, dans lequel le moyen de fixation (800) est situé entre l'interface de support (550) et la première surface (210).

8. Le dispositif optique (100) de l'une quelconque des revendications précédentes, dans lequel il comprend en outre :
- le boîtier (200) qui comprend en outre une seconde surface (220) ;
- un second sous-ensemble optique (400) ayant un second axe optique (y) et comprenant une seconde lentille (410), un second capteur d'image (415) et un support (500) approprié pour maintenir la seconde lentille (410) et pour supporter le second capteur d'image (415) ;
- un moyen de fixation (800) adapté pour amener le second sous-ensemble optique (400) dans un premier état dans lequel il peut être déplacé par rapport à la seconde surface (220) et dans un second état dans lequel une seconde interface de support (550) est attaché de manière fixe à la seconde surface (220) ; et
dans lequel la seconde interface de support (550) est au moins partiellement montée sur la seconde surface (220) du boîtier (200), et dans lequel le second capteur d'image (415) est aligné sur la seconde lentille (410), et dans lequel le moyen de fixation (800) est en contact avec la seconde interface de support (550) et la seconde surface (220), et dans lequel au moins l'une de la seconde surface (220) et de la seconde interface de support (550) est une surface non plane de manière à amener le second sous-ensemble optique (400) dans la première condition ou dans la seconde condition, et dans lequel le second axe optique (y) est agencé à un angle (α) par rapport au premier axe optique (x).

9. Le dispositif optique (100) de la revendication 8, dans lequel le second sous-ensemble optique (400) est adapté pour se déplacer par rapport à la seconde surface (220) du boîtier (200) dans trois degrés de liberté dans la première condition du moyen de fixation (800), de sorte que le premier ou le second sous-ensemble optique (300, 400) peuvent être déplacés l'un par rapport à l'autre de sorte que l'axe optique (x, y) du premier ou du second sous-ensemble optique (300, 400) peut être agencé à des orientations différentes selon un angle (α) allant de +45 ° à -45 ° avant qu'au moins l'un du premier ou du second sous-ensemble optique (300, 400) ne soit attaché de manière fixe au boîtier (200).

10. Le dispositif optique (100) de la revendication 8 ou 9, dans lequel la seconde interface de support (550) est agencée pour s'étendre vers l'extérieur par rapport au second axe optique (y), et dans lequel la seconde surface (220) est incurvée et la seconde interface de support (550) comprend une surface non incurvée, ou dans lequel la seconde surface (220) est plane et la seconde interface de support (550) est incurvée.

11. Le dispositif optique (100) de l'une quelconque des revendications 8 à 10, dans lequel la seconde surface (220) est incurvée et la seconde interface de support (550) comprend une surface incurvée, dans lequel le rayon de courbure de la surface incurvée de la seconde interface de support (550) est sensiblement le même que le rayon de courbure de la seconde surface (220), et dans lequel le centre de la courbure de la surface incurvée de la seconde interface de support (550) et la seconde surface correspondante (220) du boîtier (200) tombent sur le même point.

12. Le dispositif optique (100) de l'une quelconque des revendications 8 à 11, dans lequel au moins l'un du premier sous-ensemble optique (300) ou du second sous-ensemble optique (400) est une caméra vidéo de système de surveillance de caméra fournissant des images depuis l'arrière du véhicule, et au moins l'un de l'autre premier sous-ensemble optique (300) ou du second sous-ensemble optique (400) est une caméra vidéo pour fournir des images de vue de dessus depuis le sol dans l'environnement du véhicule.

13. Un système optique pour fournir des informations d'image à partir des zones environnantes d'un véhicule à moteur, le système comprenant :
- au moins un premier dispositif optique (100) selon l'une ou plusieurs des revendications 1 à 12, positionné de telle sorte que le premier sous-ensemble optique (300) est agencé pour capturer des images de vue de dessus d'une zone latérale gauche du véhicule à moteur ;
- au moins un second dispositif optique (100) selon l'une ou plusieurs des revendications 8 à 12, agencé pour capturer des images de l'arrière d'un côté de véhicule à moteur et de telle sorte que le premier sous-ensemble optique (300) est agencé pour capturer des images de vue de dessus d'une zone latérale droite du véhicule à moteur et de telle sorte que le second sous-ensemble optique (400) est agencé pour capturer des images de l'arrière du véhicule à moteur ; et
un contrôleur configuré pour fournir des données d'image dérivées des dispositifs optiques (100) à au moins un affichage.
